# EUROPEAN PATENT SPECIFICATION

(11) **EP 4 436 513 B1**
(45) Date of publication and mention of the grant of the patent: **08.07.2026**
(21) Application number: 22814489.5
(22) Date of filing: 21.11.2022
(51) Int. Cl.: A61C 13/15

(54) **DENTAL PHOTO-CURING DEVICE**
DENTALE LICHTHÄRTVORRICHTUNG
DISPOSITIF DE PHOTO-DURCISSEMENT DENTAIRE

(30) Priority: 24.11.2021 GB 202116963
(43) Date of publication of application: 02.10.2024
(73) Proprietor: King's College London, London WC2R 2LS (GB)
(72) Inventor: ADDISON, Owen, London SE1 9RT (GB); DEB, Sanjukta, London SE1 9RT (GB); ALKATTAN, Rana, London SE1 9RT (GB)
(74) Representative: Wallin, Nicholas James
(86) International application number: PCT/GB2022/052940
(87) International publication number: WO 2023/094798

(56) References cited:
- WO-A1-2017/197191
- KR-B1- 102 028 079
- US-A1- 2015 289 627
- US-A1- 2019 091 000

## Description

### Technical Field

The present disclosure generally relates to the use of LED lighting to enhance the curing process of resin-based materials used in Dentistry applications. More particularly, the disclosure relates to the photo-polymerization process and providing the sufficient intensity of light across a wavelength range that matches the absorption range of the photo-initiators within the photo-polymerizable materials.

### Background and Related Art

A dental filling is a type of dental treatment used to restore a damaged or decayed tooth back to its standard shape and function. One such treatment to restore the tooth involves applying a resin-based material to the damaged tooth and curing the material using a light source. This treatment should restore the tooth to its original shape and function whilst preventing further damage to the tooth. The protection provided can last for a long period of time.

Photo-polymerizable resin-based composites (RBCs) are ubiquitous in contemporary dentistry, with the main class of material being dimethacrylates. Initiating the polymerization process of photo-polymerizable RBCs requires specific wavelengths and intensities of light in relation to the specific photo-initiator compounds within the RBC system. For example, some of the most common photo-initiators are Camphorquinone (CQ), phenanthrenequinone (PQ), Lucirin TPO and Igracure 907 and 396 which require use of light sources with associated wavelengths of 470nm, 420nm, 390nm and 405nm and 440nm respectively.

Dental light curing devices require the use of multiple light sources with varying emission spectrums so that they can be used to initiate the polymerization process for a larger array of RBCs. Modern light curing units (LCUs) have been designed to deliver high irradiance (>1000mW/cm²) and many provide this over different wavelength ranges. However, due to the physical size of the LCU, LEDs must be geometrically arranged into the available space in the LCU. This results in a spatial inhomogeneity in light output (both in irradiance and in spectral range) resulting in inhomogeneous photo-curing.

During photo-polymerization of dental RBCs, monomer and radical mobility becomes significantly limited beyond the 'gel point" which typically occurs between 3 and 5s following reaction initiation, wherein the 'gel point" in polymer chemistry is the point at which there is an abrupt change in the viscosity of a solution containing polymerizable components. In polymer chemistry relating to dentistry, two outcome measures are often considered: degree of reactive group conversion (DC) and Vickers surface hardness. A higher value of DC is desirable and shows that a greater amount of monomer has been reacted during polymerization. Vickers surface hardness provides an indirect estimate of the degree of cross-linking of the polymer network with a higher value suggesting a more cross-linked structure.

Various devices have been proposed in the prior art for multi-wavelength light curing devices. US 20150289627 discloses a curing device comprising a body, a motor, at least a vane and at least a light source assembly. The vane drives the light source assembly to rotate, which is said to improve the speed and evenness of curing. In this disclosure, the invention relates to the curing of nail gel in the cosmetics industry. US 20060188835 discloses a multi-wavelength light curing gun for use in the dental industry; the device comprises a user handle, a light source support, a first light source and a second light source wherein the wavelengths of the first and second light sources differ and are positioned such that the first light path does not intersect the second light path. In this disclosure, the light sources are fixed, subsequently this introduces the drawback of lower spatial homogeneity of light output and thus poorer photocuring of the resin-based composites. KR 102028079B1 discloses a multi light device for dental use. In this disclosure, the device comprises a main body with a rotary body receiving space, a handle which accommodates a battery, a rotary body which houses a plurality of light emitting members, a position sensor, a light guide tube and a control unit. The purpose of this device is to aid in multiple dental treatments using one device. This is achieved via the plurality of light emitting members such as a 460 nm LED performing a curing light function to cure the photopolymerizable material, a white LED having a dental caries / crack diagnosis function, a 405 nm LED having a plaque diagnosis function, and an oral cancer diagnosis LED having an oral cancer diagnosis function. The drawback of this device is that this will not provide optimum curing effectiveness due to the use of only one wavelength of light for the curing process, this will subsequently result in a reduced quality of curing and therefore a reduced hardness and longevity in the resin-based composites. Moreover, it will only allow for curing of a specific composite which has an associated photo-initiator that matches the wavelength of the light source used for the curing process.

In view of the drawbacks of the prior art, it is an objective of the present disclosure to provide better spatial homogeneity of light output, both in irradiance and spectral range, for the photocuring of resin-based composites (RBCs) in dental applications.

Another objective of the present disclosure is to be of a sufficiently small size in order to be applicable for use inside modern light curing units (LCUs), whose physical size is limited by practical clinical usage requirements.

A further objective of the present disclosure is to overcome the aforementioned drawbacks of the prior art in a cost-effective manner.

### Summary of the Invention

The present invention pertains to a light curing unit for dentistry as defined by the appended claims.

The present disclosure describes a device for improved pnoto-curing of a dental resin based composite (RBC) by spectrally blending light for use in dental treatments such as fillings. The device comprises of a base plate, a rotating mechanism, and a light source assembly, wherein the light source assembly consists of a plurality of LEDs. Further, in embodiments that are according to the claimed invention, the plurality of LEDs comprising the light source assembly have differing wavelength emission ranges and peaks. In other embodiments, which do not fall within the scope of the claimed invention the device has a light source module consisting of a plurality of LEDs with the same wavelength emissions peaks. The light source assembly or light source module is fixed to the base plate and the base plate is fixed to the rotating mechanism. The base plate and light source assembly or light source module synchronously rotate. With the light source assembly, this results in spectrally blending the differing emissions spectrums within the light source assembly and subsequently causing better photo-polymerization of the RBC. With the light source module, this results in blending of the irradiation which reduces spotlighting and causes more consistent photo-polymerization of the RBC.

Spectral blending, by way of rotating differing light sources, is used to increase the quality of curing RBCs. From investigation, spectral blending has been shown to improve the surface hardness and also the spatial difference in surface hardness of photopolymerization.

In an embodiment of the present invention, the light source assembly contains a plurality of LEDs, wherein the LEDs are selected for their light spectrum characteristics and performance at curing RBCs with differing spectral characteristics.

In an embodiment of the present invention, the light source assembly contains three LEDs which are situated in close proximity.

In an embodiment of the present invention, the light source assembly comprises two LEDs with emission peaks at 420nm and a third LED with an emission peak at 390nm.

In an embodiment of the present invention, all the LEDs within the light source assembly have differing emissions peaks.

According to the present invention, the LEDs within the light source assembly are arranged to provide irradiation in generally a same direction.

In an embodiment of the present invention, the light source assembly is permanently fixed to the base plate.

In an embodiment of the present invention, the base plate is fixed to the rotor of a motor.

In an embodiment of the present invention, the motor rotates at 0.2Hz or greater and consequently the fixed base plate and light source assembly also rotate at the same frequency.

In an embodiment of the present invention, the motor rotates between 0.2Hz and 10Hz and consequently the fixed base plate and light source assembly also rotate at the same frequency.

In an embodiment of the present invention, the motor rotates at frequencies up to 500Hz and consequently the fixed base plate and light source assembly also rotate at the same frequency.

In an embodiment of the present invention, the light source assembly, the base plate, and the rotating mechanism are easily retrofitted into current LCUs, requiring only minor design changes.

In an embodiment of the present invention, the motor and light source assembly are powered by a battery that is stored within the housing of the LCU.

In an embodiment of the invention, the invention is a dentistry handset that consists of a light source module and a rotating mechanism.

In an embodiment of the present invention, the light source module consists of a plurality of LEDs.

Further features and advantages of embodiments of the present disclosure will become apparent from the appended claims.

### Brief Description of the Drawings

Figure 1 shows a perspective view of a typical existing light curing unit (LCU).
Figure 2 shows a photograph of a typical existing arrangement of a light source assembly with three LEDs.
Figure 3 shows a plot of spectral irradiance against wavelength.
Figure 4 shows a schematic of an LCU according to an embodiment of the invention.
Figure 5 shows a 2D thermograph of a CQ photoinitiated di-methacrylate photopolymer after light initiation with the relative positions of the LED outputs shown on the right.
Figure 6 shows a plot of the Vickers Hardness level in different photopolymers when using static or rotated light source assemblies.
Figure 7 shows a plot of the Degree of reactive group conversion percentage in different photopolymers when using static or rotated light source assemblies.

### Detailed Description of the Preferred Embodiments

Embodiments of the present disclosure improve photo-polymerization in dental fillings by spectrally blending different wavelength emissions spectra to better match to the absorption ranges of the photo-initiators within the polymer by rotating the light sources producing the emissions during dental polymer curing. This results in improved Vickers hardness and Degree of reactive group conversion and less spatial difference across the polymer. Embodiments of the present disclosure therefore generally comprise a dental light curing unit (LCU), which comprises a light source assembly attached thereon to a baseplate which in turn is synchronously rotated by a rotating mechanism located within a housing, such that the light source assembly radiates light out a housing aperture. The light source assembly comprises a plurality of light sources such as LEDs, at least two, with differing wavelength emissions spectra. The LEDs can have many different emissions peaks to match the absorption range of common photo-initiators used in dental fillings (such as 390nm for TPO, 405nm for Igracure 907, 440nm for Igracure 396, and 470nm for CQ). The baseplate and light source assembly are rotated synchronously by the rotating mechanism at a frequency greater than 0.2Hz, or generally between 0.2Hz and 10Hz. Rotating the light sources during curing of the dental fillings has been found to give improved dental fillings with greater longevity. The greater longevity is due to low residual monomer and a decrease in interaction with oral fluids.

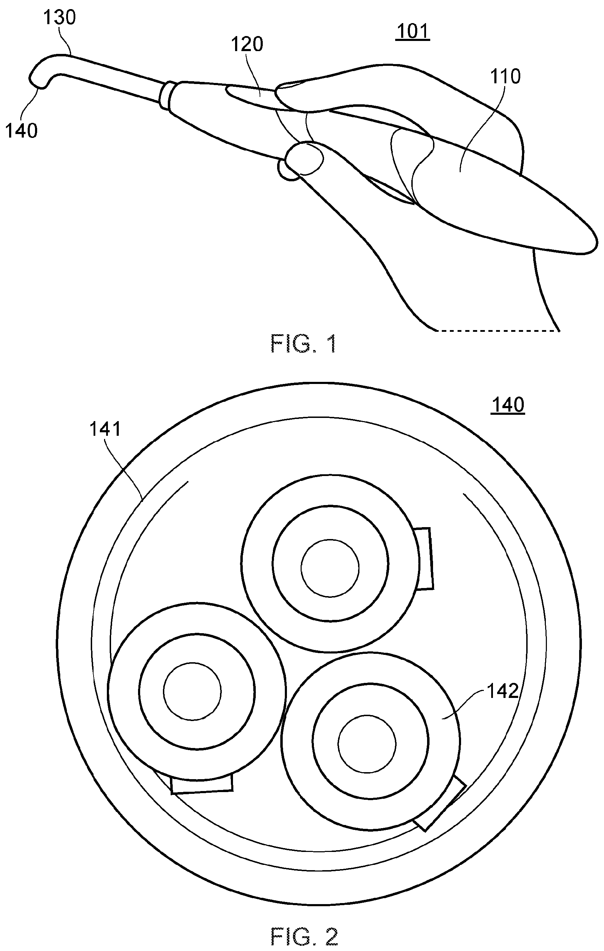

A first embodiment of the present disclosure will now be described with respect to Figures 1 and 2. Figure 1 is a typical light curing unit (LCU) 101 and Figure 2 is a view into the housing aperture 140. As shown in the diagrams, the LCU 101 comprises a housing 110, a button or toggle switch 120, a neck portion 130 and a housing aperture 140. In an embodiment of the invention, the housing 110 is of an ergonomic form such that it can be easily gripped and held by a user's hand. The button/toggle switch 120 is mounted on the housing within reach of the users' fingers for ease of operation. The housing includes a neck portion 130 which is narrower to allow for easier access to the patients' mouth. The neck portion contains the rotational mechanism, base plate and light source assembly which is positioned at the end of the neck portion 130 towards the housing aperture 140. The housing aperture 140 shows the base plate 141 and the light source assembly 142. The light source assembly 142 is situated in the housing aperture 140 such that the irradiance radiates from the housing aperture 140. The base plate 141 and light source assembly 142 are attached to the motor within the neck portion of the housing 130, the motor rotates to drive the base plate and light source to synchronously rotate. The motor and light source assembly 142 are supplied power by an internal battery which is situated within the housing 110.

In this first embodiment, a user first applies a RBC to a patients damaged tooth; the user would then grip the housing 110 of the LCU 101; position the LCU housing aperture 140 such that the damaged tooth containing the RBC aligns with the light source assembly 142; the user then pushes the button/toggle switch 120 with their finger to supply the motor and light source assemble 142 with power from the internal battery, thus causing the motor, baseplate 141 and light source assembly 142 to rotate; the rotating light sources then cure the RBC.

The present embodiment provides numerous advantages over the prior art arrangements. Firstly, the present embodiment improves the homogeneity of output irradiance for use in curing dental filling. This will result in better curing of the RBCs by improving the Vickers hardness and degree of reactive group conversion in the polymer. Moreover, another advantage of the embodiment is that it is relatively cheap to produce and of suitable size as to be easily retrofitted into existing LCUs.

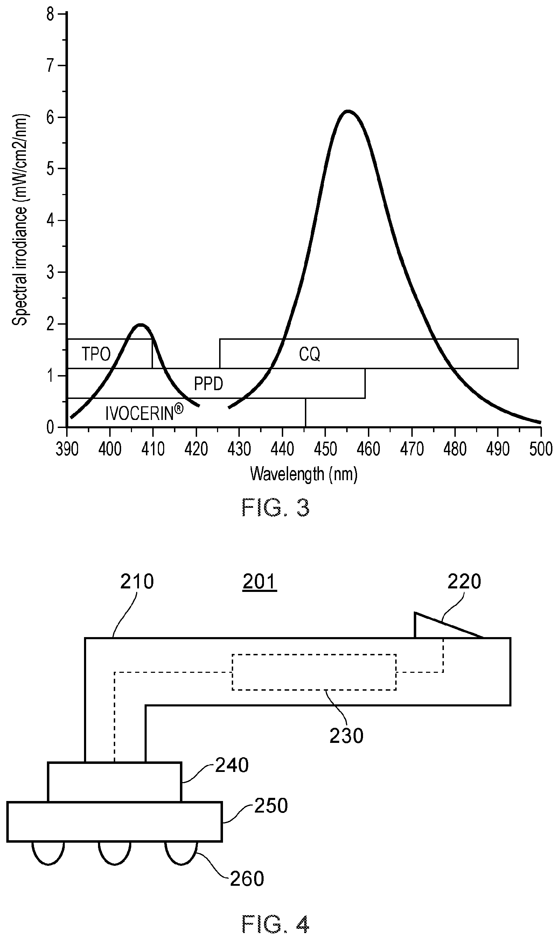

The present embodiment has a plurality of LEDs in the light source assembly, with the LEDs having differing emissions peaks. Figure 3 shows a plot of spectral irradiance vs wavelength, where common photo-initiator species (TPO, CQ, PPD and IVOCERIN) and their associated absorption ranges are plotted as bars. Moreover, Figure 3 shows a plotted line indicating an example emission spectra of a multi-LED curing unit. The line indicates two peaks that correspond to each LEDs emission spectra at around 395nm and 455nm. This figure shows the importance of having a plurality of LEDs with differing emissions peaks, to facilitate the photo-polymerization process for different species of photo-initiator within the dental polymer.

Further details of another embodiment of the present disclosure will be described with respect to Figure 4. Figure 4 shows a schematic of the LCU device 201. As shown in the figure the LCU 201 comprises a housing 210, a button or toggle switch 220, control circuitry 230, a rotating mechanism 240, a base plate 250 and a light source assembly 260. The button or toggle switch 220 is mounted on the housing 210 such that it is within reach of the users' finger for ease of operation. The button or toggle switch 220 is electrically connected to the control circuitry 230, which in turn is connected to the rotating mechanism 240 comprising a motor. The base plate 250 and light source assembly 260 are fixed to the motor such that when the motor rotates, the base plate 250 and light source assembly 260 synchronously rotate. The rotating mechanism 240 and light source assembly 260 are supplied power by an internal battery which is situated within the housing 210.

In this embodiment, the user first applies a RBC to a patients damaged tooth; the user would then grip the housing 210 of the LCU 201; position the LCU 201 such that the damaged tooth containing the RBC aligns with the light source assembly 260; the user then user the button/toggle switch 220 with their finger to supply the rotating mechanism 240 and light source assemble 260 with power from the internal battery via the control circuitry 230 causing the rotating mechanism, baseplate 250 and light source assembly 260 to rotate; the rotating light source then cures the RBC.

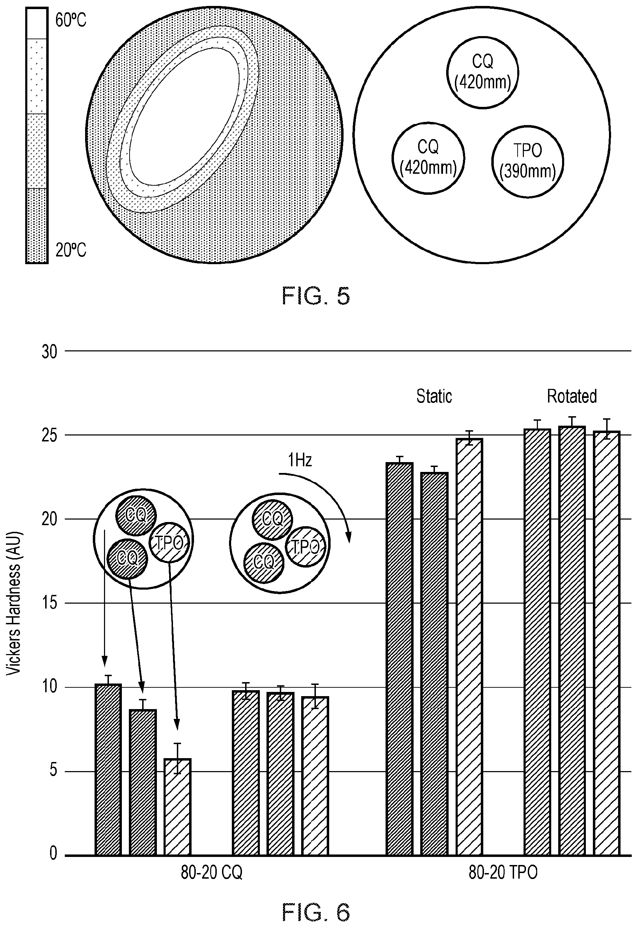

Embodiments of the invention typically enable rotation of the light source assembly consisting of a plurality of LEDs with differing emissions peaks. The rotation of the light source assembly spectrally blends the differing emission spectrums of the LEDs to ensure the photo-polymerization process is initiated and completed effectively for all present photo-initiator species. Figure 5 shows a 2D thermograph of a 12mm diameter and 2mm thickness CQ photoinitiated di-methacrylate photopolymer which shows the temperature rise associated with the exothermic reaction between the polymer and the 420nm output LEDs which corresponds to the absorption peak of the CQ photo-initiator. From Figure 5 it is apparent that when the LEDs are not rotated, all areas of the polymer do not receive equal levels of irradiation that relate to the specific photo-initiator. Therefore, considering Figure 5, the right-hand side of the thermograph shows very low levels of irradiation with an emissions peak of 420nm and thus, poor curing of CQ photo-initiators would occur in this area. This highlights the positive aspect of spectrally blending the LEDs irradiance which results in improved reliability, speed and efficiency of photo-curing and subsequently greater longevity of dental filings.

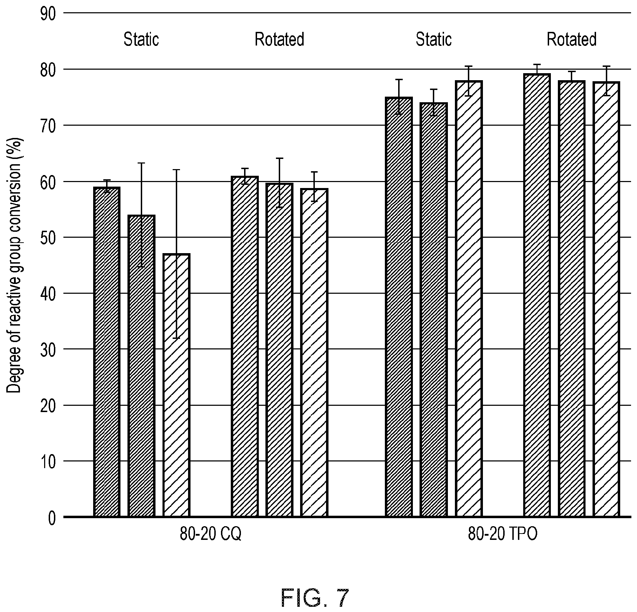

Embodiments of the present disclosure enable a significant improvement in the variation levels of surface hardness and degree of reactive group conversion (DC) that can occur in LCU devices with static light source assemblies. Figures 6 and 7 demonstrate this effect. Figure 6 shows a plurality of plots that show the Vickers Hardness levels that occur from using either static or rotated light source assembly. In this instance, a depiction of the light source assembly used can be seen in Figure 6, which shows that the light source assembly consists of two LEDs with CQ associated emissions peaks and a further LED with a TPO associated emissions peak. In Figure 6 there is a significant reduction in surface hardness for the CQ initiated system, correlating with the non-matched TPO optimized LED. However, a light source assembly rotation of 1Hz during photocuring significantly reduces any spatial difference in surface hardness. Further, in Figure 6, for the TPO initiated system a small but significant difference in surface hardness is observed with increased hardness associated with the area illuminated by the TPO optimized LED. Again, a 1Hz rotation of the light source assembly during photocuring eliminates any spatial difference in surface hardness. Figure 7 shows a plurality of plots that show the DC that occur from using either static or rotated light source assembly; the light source assembly is consistent with the light source assembly discussed for Figure 6. Fourier-transform infrared (FTIR) spectroscopy was used to allow the DC to be quantified. In Figure 7, there is a significant spatial variability in DC for the CQ initiated system, with the lowest values recorded for the non-matched TPO optimized LED. Rotating the light source assembly at 1Hz during photocuring eliminates any spatial difference in DC. For the TPO initiated system, a small but significant difference in DC is observed with increased hardness associated with the area illuminated by the TPO optimized LED. Again, a light source assembly rotation of 1Hz during photocuring eliminates any spatial difference in DC.

An embodiment that does not fall within the scope of the claimed invention, will now be described with respect to Figures 1 and 2. As aided by the diagrams, the dentistry handset comprises a housing 110, a button or toggle switch 120, a neck portion 130 and a housing aperture 140. In an embodiment of the invention, the housing 110 is of an ergonomic form such that it can be easily gripped and held by a user's hand. The button/toggle switch 120 is mounted on the housing within reach of the users' fingers for ease of operation. The housing includes a neck portion 130 which is narrower to allow for easier access to the patients' mouth. The neck portion contains the rotational mechanism, base plate and light source module which is positioned at the end of the neck portion 130 towards the housing aperture 140. The housing aperture 140 shows the base plate 141 and the light source module 142. The light source module 142 is situated in the housing aperture 140 such that the irradiance radiates from the housing aperture 140. The base plate 141 and light source module 142 are attached to the motor within the neck portion of the housing 130, the motor rotates to drive the base plate and light source to synchronously rotate. The motor and light source module 142 are supplied power by an internal battery which is situated within the housing 110. The light source module 142 comprises of one or more LEDs having the same emission wavelength peaks at 390nm, 405nm, 440nm or 470nm.

In a further embodiment of the invention, the light source module is rotated by the rotating mechanism at a frequency greater than 0.2Hz.

In a yet further embodiment of the invention, the light source module is rotated by the rotating mechanism at a frequency between 0.2Hz and 10Hz.

Moreover, in another embodiment of the invention, the light source module is rotated by the rotating mechanism at frequencies up to 500Hz.

Various modifications, whether by addition, substitution, or deletion will be apparent to the intended reader to provide further embodiments of the present invention, which is defined by the appended claims.

## Claims

1. A light curing unit, LCU (201), for dentistry, comprising:
a baseplate (250) having a plurality of light sources (260) disposed thereon and
arranged to provide irradiation in generally a same direction; and
a mechanism (240) to rotate the baseplate (250) during use whereby to spectrally blend light received from the light sources (260) at any irradiated point;
wherein the plurality of light sources (260) have different emissions spectra.

2. A light curing unit (201) according to claim 1, wherein the frequency of rotation is greater than 0.2Hz.

3. A light curing unit (201) according to any preceding claim, wherein the plurality of light sources (260) comprise at least two LEDs each having a single emissions spectra peak at one of: 390nm, 405nm, 420nm, 440nm, or 470nm wavelength.

4. A light curing unit (201) according to any preceding claim, wherein the light sources (260) are a plurality of light emitting diodes, LEDs.

5. A light curing unit (201) according to any preceding claim, wherein the rotating mechanism (240) comprises at least a motor.

6. A light curing unit (201) according to any preceding claim, wherein the rotating mechanism (240) and light sources (250) are powered by an internal battery.

## Patentansprüche

1. Lichthärteeinheit, LCU (201), für die Zahnmedizin, umfassend:
eine Grundplatte (250), die eine Vielzahl von Lichtquellen (260) aufweist, die darauf angeordnet und so ausgerichtet sind, dass sie Bestrahlung im Allgemeinen in dieselbe Richtung bereitstellt; und
einen Mechanismus (240) zum Drehen der Grundplatte (250) während der Verwendung, wobei das von den Lichtquellen (260) an einem beliebigen bestrahlten Punkt empfangene Licht spektral gemischt wird;
wobei die Vielzahl von Lichtquellen (260) unterschiedliche Emissionsspektren aufweisen.

2. Lichthärteeinheit (201) nach Anspruch 1, wobei die Drehfrequenz größer ist als 0,2 Hz.

3. Lichthärteeinheit (201) nach einem vorstehenden Anspruch, wobei die Vielzahl von Lichtquellen (260) mindestens zwei LEDs umfasst, die jeweils einen einzigen Emissionsspektrumpeak bei einer der folgenden Wellenlängen aufweisen: 390 nm, 405 nm, 420 nm, 440 nm oder 470 nm.

4. Lichthärteeinheit (201) nach einem vorstehenden Anspruch, wobei die Lichtquellen (260) eine Vielzahl von lichtemittierenden Dioden, LEDs, sind.

5. Lichthärteeinheit (201) nach einem vorstehenden Anspruch, wobei der Drehmechanismus (240) mindestens einen Motor umfasst.

6. Lichthärteeinheit (201) nach einem vorstehenden Anspruch, wobei der Drehmechanismus (240) und die Lichtquellen (250) von einer internen Batterie mit Leistung versorgt werden.

## Revendications

1. Unité de photodurcissement, LCU (201), pour dentisterie, comprenant :
une plaque de base (250) présentant une pluralité de sources lumineuses (260) disposées sur celle-ci et agencées pour fournir un rayonnement généralement dans une même direction ; et
un mécanisme (240) pour faire tourner la plaque de base (250) pendant l'utilisation de telle sorte que la lumière reçue des sources lumineuses (260) soit mélangée spectralement à n'importe quel point irradié ;
dans laquelle la pluralité de sources lumineuses (260) présentent des spectres d'émission différents.

2. Unité de photodurcissement (201) selon la revendication 1, dans laquelle la fréquence de rotation est supérieure à 0,2 Hz.

3. Unité de photodurcissement (201) selon une quelconque revendication précédente, dans laquelle la pluralité de sources lumineuses (260) comprennent au moins deux LED présentant chacune un pic de spectre d'émission unique à l'une parmi : une longueur d'onde de 390 nm, 405 nm, 420 nm, 440 nm, ou 470 nm.

4. Unité de photodurcissement (201) selon une quelconque revendication précédente, dans laquelle les sources lumineuses (260) sont une pluralité de diodes électroluminescentes, LED.

5. Unité de photodurcissement (201) selon une quelconque revendication précédente, dans laquelle le mécanisme rotatif (240) comprend au moins un moteur.

6. Unité de photodurcissement (201) selon une quelconque revendication précédente, dans laquelle le mécanisme rotatif (240) et les sources lumineuses (250) sont alimentés par une batterie interne.
